# EUROPEAN PATENT SPECIFICATION

(11) **EP 0 799 251 B1**
(45) Date of publication and mention of the grant of the patent: **08.03.2000**
(21) Application number: 95943208.9
(22) Date of filing: 18.12.1995
(51) Int. Cl.: C08F 8/32, C10M 145/14, C10M 149/02

(54) **PROCESS FOR PREPARING STAR POLYMER COMPOSITIONS**
VERFAHREN ZUR HERSTELLUNG VON STERNPOLYMER-ZUSAMMENSETZUNGEN
PROCEDE DE PREPARATION DE COMPOSITIONS POLYMERES A STRUCTURE EN ETOILE

(30) Priority: 20.12.1994 US 359806
(43) Date of publication of application: 08.10.1997
(73) Proprietor: SHELL INTERNATIONALE RESEARCH MAATSCHAPPIJ B.V., 2596 HR Den Haag (NL)
(72) Inventor: SUTHERLAND, Robert, Jude, Houston, TX 77095 (US)
(74) Representative: Hart, Richard Joseph
(86) International application number: PCT/EP95/05129
(87) International publication number: WO 96/19505

(56) References cited:
- EP-A- 0 029 622
- EP-A- 0 459 588
- EP-A- 0 541 178
- EP-A- 0 603 955
- WO-A-87/03890
- US-A- 4 857 599
- US-A- 5 338 802
- US-A- 5 360 564

## Description

The present invention relates to a process for preparing star polymers compositions which can be used as viscosity index improvers for oil compositions.

Star polymers useful as viscosity index improvers for oils and lubricants are described in European patent application No. 0603955 A2. These star polymers comprise:
at least 3 first arms, each arm comprising a hydrogenated, polymerised conjugated diene and having a peak molecular weight from 10,000 to 200,000;
at least 3 second arms, each arm comprising a polymerised methacrylate and/or amide or imide derivative thereof and having a peak molecular weight from 500 to 10,000; and
a central core comprising a polymerised bisunsaturated monomer, wherein the central core connects the first and second arms in a star configuration.

The amide or imide derivatives are typically produced by extruding the base polymer at a temperature of 250°C in the presence of an amine.

It should be noted, however, that butadiene and isoprene units in the polymer thermally degrade at such a high temperature. Moreover, such extruder method exposes the polymer to excessive shear stress. The extruder method is thus limited to polymers that can withstand excessive heat and stress.

Surprisingly, it has now been found that nitrogen-containing star polymer derivatives can advantageously be prepared without exposing a base polymer to such excessive heat and stress by adding an acid catalyst and thereafer an amine to a concentrate of the base polymer in a lubricating oil.

Accordingly, the present invention related to a process for preparing a nitrogen-containing star polymer composition comprising the steps of:
a) dissolving a star polymer in a lubricating oil at a polymer concentration of less than 50% by weight, which star polymer comprises: at least 3 first arms comprising hydrogenated, polymerised conjugated diene units and having a peak molecular weight from 10,000 to 200,000;
   at least 3 second arms comprising polymerised methacrylate units and having a peak molecular weight from 500 to 10,000; and
   a central core comprising a polymerised bisunsaturated monomer, wherein the central core connects the first and second arms in a star configuration;
b) reacting the dissolved star polymer with an acid catalyst; and
c) reacting the dissolved star polymer with an amine.

The star polymers used in accordance with the present invention are decribed in European patent application No. 0603955 A2. The star polymers are preferably dissolved in the lubricating oil at a polymer concentration of from 3 to 30% by weight.

In accordance with the present invention suitably more than 75% of the polymerised alkyl methacrylate units are converted to amide or imide groups. Preferably, at least 80%, and more preferably at least 90% of the polymerised methacrylate units are converted to amide or imide groups. This can for instance readily be achieved when the second arms comprise polymerised t-butylmethacrylate.

The star block polymers are produced by preparing first arms comprising the conjugated diene units, coupling the first arms by polymerising the bisunsaturated monomer, growing second arms comprising the alkyl methacrylate units from the polymerised biunsaturated monomer, and hydrogenating the polymerised conjugated diene units. The conjugated diene units, preferably isoprene or butadiene units, are anionically polymerised with an initiator, preferably an alkyl lithium. Alkyl lithium initiators having a secondary alkyl group are preferred. Most preferred is sec-butyllithium.

The bisunsaturated monomer couples the conjugated diene arms into a "star" molecule having a plurality of the first polymeric arms radiating from a central core which comprises the polymerised bisunsaturated compound. After coupling, the core of the molecules contain residual lithium sites which initiate the growth of the second polymeric arms.

One or more of the first polymeric arms may comprise polymerised vinyl arene units, alone, or in a tapered or block configuration with the polymerised conjugated diene units. The preferred vinyl arene is styrene and the preferred styrene content for the star polymers is less than 10%.

The polymerisation to produce the first polymeric arms is conducted by the conventional method of contacting the monomer and polymerisation initiator in a suitable reaction solvent under moderate reaction conditions. Hydrocarbon reaction solvents, particularly cycloaliphatic hydrocarbon solvents such as cyclohexane are suitable as reaction solvents. It is useful on some occasions to employ a reaction solvent of greater polarity and in such instances a mixed solvent, often a mixture of cyclohexane and a polar co-solvent, e.g. an ether co-solvent such as diethyl ether or tetrahydrofuran, is used. The use of cyclohexane or cyclohexane-diethyl ether as reaction solvent is preferred. The polymerisation temperature is moderate, for example from 10°C to about 80°C and it is often useful to conduct this polymerisation at ambient temperature. The reaction pressure is a pressure sufficient to maintain the reaction mixture in a liquid phase. Typical reaction pressures are from 81.1 to 506.6 kPa (0.8 to 5 atmospheres).

Control of the molecular weight of the first polymeric arms is achieved by conventional methods such as controlling the ratio of initiator to monomer. The polymeric arms are conventionally termed a living polymer because of the presence therein of an organometallic site. The first polymeric arms preferably have a peak molecular weight between 10,000 and 200,000, most preferably between 20,000 and 100,000.

The first polymeric arms serve as the polymerisation initiator for the bisunsaturated monomer which crosslinks to form the central core of the star polymer molecules. A variety of bisunsaturated monomers are useful in the production of the core of the star block polymers of the present invention. Preferred bisunsaturated monomers are di(alkenyl) aromatic compounds having up to 20 carbon atoms and up to 2 aromatic rings, including divinylbenzene, divinyltoluene, divinylbiphenyl, divinylnaphthalene, diisopropenylbenzene, diisopropenylbiphenyl and diisobutenylbenzene. Most preferred is divinylbenzene.

The crosslinking of the bisunsaturated monomer with the first polymeric arms is preferably conducted by adding the bisunsaturated monomer to the reaction mixture containing the first polymeric arms. The use of the same or similar reaction conditions and solvent are suitable for the crosslinking reaction to form the core of the star block polymer.

The core of crosslinked bisunsaturated monomer has a plurality of organometallic sites which serve as the polymerisation initiator for the methacrylate which forms the relatively smaller second polymeric arms. Alkyl methacrylates are preferred and have the structure 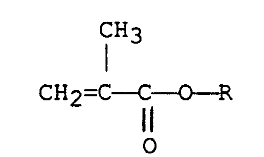 wherein R is an alkyl group comprising from 1 to 30 carbon atoms, preferably from 1 to 20 carbons. The alkyl methacrylate is polymerised through the ethylenic unsaturation of the methacrylate group. The alkyl methacrylate monomers which are polymerised according to the present invention include methyl methacrylate, ethyl methacrylate, sec-butyl methacrylate, t-butyl methacrylate, sec-amyl methacrylate, octyl methacrylate, decyl methacrylate, dodecyl methacrylate and octadecyl methacrylate. The polymerisation is preferably conducted in the reaction mixture containing the star molecules having organometallic sites on the central core.

The choice of alkyl methacrylate will in part depend upon the particular nature of the star block polymer desired. However, the production of polymerised alkyl methacrylate branches wherein the alkyl is primary and of few carbon atoms is relatively difficult because of the rather low reaction temperatures that are required to produce the polymerised alkyl methacrylate branches. Alternatively, the production of polymerised alkyl methacrylate branches wherein the alkyl moiety is a higher alkyl moiety is also difficult because of the relatively inactive character of such alkyl methacrylates and the difficulty of readily obtaining the desired alkyl methacrylate monomer. The preferred alkyl methacrylate for forming the star block polymer of methacrylate-containing branches is a branched-butyl methacrylate, i.e. sec-butyl methacrylate or t-butyl methacrylate, or a combination thereof. The star block polymers resulting from use of these methacrylates are preferred products because of the desirable properties thereof and because of the relative ease of production. Star block polymers incorporating other alkyl methacrylate moieties are produced directly from the corresponding alkyl methacrylate but it is often desirable to produce such polymers by initially employing a branched-butyl methacrylate to produce a star block polymer having branched-butyl methacrylate branches and subsequently trans-esterifying the initial star block polymer product to incorporate the desired alkyl moieties.

In the production of a branched-butyl methacrylate-containing polymer suitable reaction conditions typically include a reaction temperature from -80°C to 80°C with the lower portion of that range being preferred for polymerisation of sec-butyl methacrylate and the higher portion of the range being preferred for t-butyl methacrylate. The polymerisation pressure is sufficient to maintain the reaction mixture in a liquid phase, typically up to 506.6 kPa (5 atmospheres).

The star polymers are hydrogenated to reduce the extent of unsaturation in the aliphatic portion of the polymer. A number of catalysts, particularly transition metal catalysts, are capable of hydrogenating the aliphatic unsaturation of the star polymers. It is preferred to employ a "homogeneous" catalyst formed from a soluble nickel compound and a trialkylaluminium. Nickel naphthenate or nickel octoate is a preferred nickel salt. Although this catalyst system is one of the catalysts conventionally employed for selective hydrogenation in the presence of aromatic groups, other "conventional" catalysts are not suitable for hydrogenation of the conjugated alkadienes in the ester containing polymers.

In the hydrogenation process, the base polymer is reacted in situ, or if isolated is dissolved in a suitable solvent such as cyclohexane or a cyclohexane-ether mixture and the resulting solution is contacted with hydrogen gas in the presence of the homogeneous nickel catalyst. Hydrogenation suitably takes place at temperatures from 25°C to 150°C and hydrogen pressures from 202.6 to 6991.1 kPa (2 atm to 69 atm). Hydrogenation is considered to be complete when at least 90%, preferably at least 98%, of the carbon-carbon unsaturation of the aliphatic portion of the base polymer has been saturated, as can be determined by nuclear magnetic resonance spectroscopy.

The hydrogenated star polymer is then recovered by conventional procedures such as washing with aqueous acid to remove catalyst residues, solvent removal, or addition of a non-solvent to coagulate the polymer. A typical non-solvent for this purpose is aqueous methanol.

The star polymer is reacted with an amine after forming an acidified concentrate of the star polymer in a lubricating oil. Concentrates of polymeric viscosity index improvers are frequently sold to simplify the formulation of commercial lubricating oils. Amidation of the star polymer after formation of the acidified concentrate can be readily done by the formulator of the lubricating oil using any compatible amine.

The star polymer is suitably dissolved in a lubricating oil at a temperature of 120°C or more to form a concentrate having from 3% to 30% by weight of the star polymer. The ester groups of the methacrylate units are then saponified to carboxylic acid groups by reaction with an acid catalyst, e.g. p-toluenesulphonic acid, or another suitable strong organic acid. The dissolved star polymer is reacted with the acid catalyst preferably at a temperature between 100 and 130°C.
Suitably, the amount of acid catalyst used is such that more than 75% of the methacrylate ester groups are saponified to carboxylic acid groups. Preferably, at least 50% and more preferably at least 90% of the ester groups are saponified to carboxylic acid groups. Usually, only a small amount of acid catalyst needs to be used as will be understood by the skilled person. The carboxylic acid groups then readily react with the amine at elevated temperature (e.g. 120°C) to form the ammonium salt. The concentrate is then heated to a temperature of between 140 to 180°C for between 0.1 and 45 minutes to convert the ammonium salt to the amide or imide form. Preferably, the amine is reacted at a temperature of between 160 to 180°C for between 0.1 and 30 minutes.

Enough amine is added to the concentrate to ensure that at least 80%, preferably at least 90% of the carboxylic acid groups are converted to amide or imide groups.

Suitable amines are alkyl or aryl amines containing from 1 to 10 nitrogen atoms having at least one primary or secondary amine site. The preferred amines are primary amines having the structure R-NH₂ as described in column 3, lines 32-62, of United States Patent No. 4,246,374. The most preferred primary amine is N,N-diethylaminopropylamine (DAP).

The preferred amines may contain secondary or tertiary amines. Additional amines include, but are not limited to, N,N-dimethylpropylamine, triethylene tetramine, aniline, and tetraethylenepentamine.

The preferred polymers for use in the present invention comprise an average per molecule of 10 to 50 first arms consisting of at least 90% by weight of hydrogenated, polymerised isoprene units, the first arms having a peak molecular weight from 10,000 to 100,000, at least 10 to 50 second arms consisting of at least 20% by weight of polymerised t-butylmethacrylate units, the second arms having a peak molecular weight from 1,000 to 10,000, and one central core per molecule, the core comprising polymerised divinylbenzene, wherein the central cores connect the first and second polymeric arms in a star configuration. The star polymers are preferably dissolved in a lubricating oil to a polymer concentration from 3% to 30% by weight, converted from ester to acid form with an acid catalyst, and are then reacted with an amine, most preferably N,N-diethylaminopropylamine.

The molecular weight of the preferred star polymers will vary with the choice of reaction conditions, reaction solvent and the relative proportions of monomeric reactants as well as determined in part by whether the functionalised branches are homopolymeric or contain an internal portion of polymerised anionically polymerisable monomer. The star polymers of particular interest have a peak molecular weight from 33,000 to 5.5 x 10⁶ and most preferably from 100,000 to 3 x 10⁶. The precise peak molecular weight will vary from molecule to molecule and the above values are average values. It is, however, characteristic of the star polymers that the polymer has a rather narrow molecular weight distribution.

The preferred star polymers are represented by the formula

(A)ₜC(M)ₛ (I)

wherein C represents the core comprising crosslinked divinylbenzene, A represents the first arms consisting of at least 90% by weight of the hydrogenated, polymerised isoprene units, M represents the second arms consisting of at least 20% by weight of the polymerised t-butylmethacrylate units, s is from 10 to 50, and t is from 10 to 50, wherein t is equal to or greater than s.

While the proportions of the moieties represented by the terms C, A, and M will vary somewhat from molecule to molecule, the percentage of the molecular weight of the molecule attributable to the central core, C, is no more than 10% and preferably no more than 2%.

Each A block or segment in the preferred star polymer preferably consists of at least 90% by weight of the hydrogenated, polymerised isoprene units. Within the preferred A block, one or more blocks of styrene or hydrogenated butadiene having high 1,4-addition can be placed to improve physical properties of the polymer.

Each M consists preferably of at least 20% by weight of polymerised t-butylmethacrylate. Homopolymeric M segments or blocks are most preferred. The t-butylmethacrylate monomer is commercially available in high purity from Mitsubishi-Rayon, Japan. Less pure t-butylmethacrylate is available from Monomer, Polymer and Dajac and can be used if passed through a column of alumina and 13X zeolite to remove methacrylic acid and t-butylalcohol. The preferred zeolites have a cavity size no less than 10⁻⁶ mm (10 angstroms) such as Zeolite 13X which has the formula Na₈₆(AlO₂)₈₆(SiO₂)₁₀₆267H₂O.

The star polymers used in accordance with the present invention have the advantage of little or no coupling of two or more molecules during polymerisation of the alkyl methacrylate.

Suitably, the amine is added after the methacrylic ester has been exposed to the carboxylic acid at a temperature of between 120 to 130°C, the temperature is then increased to 140 to 180°C for about 0.1 to 45 minutes to effect the conversion to the amide or imide form.

The star polymer compositions prepared in accordance with the present invention are very useful as dispersant and viscosity index improver in motor oils.

Suitable lubricating oils present in the present star polymer compositions are natural, mineral or synthetic lubricating oils.

Natural lubricating oils include animal and vegetable oils, such as castor oil. Mineral oils comprise the lubricating oil fractions derived from crude oils, coal or shale, which fractions may have been subjected to certain treatments such as clay-acid, solvent or hydrogenation treatments. Synthetic lubricating oils include synthetic polymers of hyrocarbons such as polyalphaolefins; modified alkylene oxide polymers; and ester lubricants. These lubricating oils are preferably crankcase lubricating oils for spark ignition and compression-ignition engines, but include also hydraulic lubricants, metalworking fluids and automatic transmission fluids.

Preferably the lubricating base oil component of the compositions is a polyalphaolefin oil, or a mineral lubricating oil or a mixture of mineral lubricating oils, such as those sold by member companies of the Royal Dutch/Shell Group under the designations "HVI", or "XHVI" (trade mark).

The viscosity of the lubricating base oils present in the compositions may vary within wide ranges, and is generally from 3 to 35mm²/s at 100°C.

The lubricating oil compositions may further contain a number of other additives such as antioxidants, metal detergents such as (overbased) alkaline earth metal phenates, sulphonates and salicylates, ashless dispersants such as polyolefin-substitued succinimides, e.g. those decribed in GB-A-2,231,873, foam inhibitors, corrosion inhibitors, pour point depressants, friction modifiers, and extreme pressure/anti-wear additives such as zinc or sodium dithiophosphates.

The invention is further illustrated by the following Illustrative Embodiments which should not be construed as limiting.

### Star Polymer Synthesis

A first reactor was charged with 122.47 kg of cyclohexane and 13.61 kg of styrene monomer. To the stirred mixture 2.95 kg of sec-butyllithium was added and the styrene was fully converted into polystyrene at 60C.

In a second reactor 123.83 kg of cyclohexane and 22.68 kg of isoprene monomer were titrated with sec-butyllithium to remove any impurities. Then 12.25 kg of the living homopolystyrene from step 1 was added to the isoprene and the isoprene was fully converted into polyisoprene at 60°C. Next, 200 ml of divinylbenzene (55% dvb) was added to the living styrene-isoprene polymeric arms and reacted at 80C for 30 minutes to form the living star polymer.

The temperature of the star polymer mixture was lowered to 35°C and 0.54 kg of tert-butylmethacrylate (tBMA) was added to the reaction. The tBMA was polymerised for 30 minutes at 35°C to form the second polymeric arms, and the reaction was quenched with 19 ml of methanol.

The star polymer was hydrogenated using a catalyst composed of nickel octoate reduced by triethyl aluminium. The ratio of nickel to aluminium for this particular example was 1:2.3. The total catalyst charge was periodically increased to give a product with low residual unsaturation.

### Example 1A, 1B

A beaker containing 360 grams of Exxon 100N LP lubricating oil, 0.2 grams Irganox 1010 antioxidant, and 0.1 grams of p-toluenesulphonic acid was heated to 125°C. Then 40 grams of the star polymer described above was added and dissolved. Analysis by FT-IR confirmed that the methacrylate groups had converted to carboxylic acid groups by the time the polymer had completely dissolved. Then 1.9 grams of diethylaminopropylamine (DAP) was added as a 50% by weight solution of amine in the Exxon 100N LP base oil. The oil concentrate temperature was then increased to 180°C and the solution was removed from the heat (example 1A). Analysis by FT-IR showed that the acid groups were completely converted to amide groups. Example 1-B is a concentrate of the starting non-modified polymer containing intact methacrylate ester groups.

### Example 2

A beaker containing 360 grams of Exxon 100N LP lubricating oil and 0.2 grams Irganox 1010 antioxidant was heated to 125°C. Then 40 grams of the star polymer described above was added and dissolved. Then 0.1 grams of p-toluenesulphonic acid was added to the mixture and allowed to react for 30 minutes to convert the methacrylate groups to acid groups. Analysis by FT-IR confirmed that the methacrylate groups had converted to carboxylic acid. Then 1.9 grams of diethylaminopropylamine (DAP) was added as a 50% by weight solution of amine in the Exxon 100N LP base oil. The oil concentrate temperature was then increased to 180°C and the solution was removed from the heat. Analysis by FT-IR showed that the acid groups were completely converted to amide groups.

### Example 3A-3E

The procedures of Examples 1 and 2 were used to make additional dispersant viscosity index improvers as indicated in the tables by replacing the DAP with various amines including: ethylenediamine (EDA) (example 3A), diethylenetriamine (DETA) (example 3B), triethylenetetramine (TETA) (example 3C), tetraethylenepentamine (TEPA) (example 3D), and mixtures of linear alkylamines (example 3E). The time at which the concentrates were held at 180°C varied from 0.1 to 30 minutes based on FT-IR evidence of the conversion to the amide.

### Example 4

The oil concentrates of Examples 1, 2, 3A-E were used to blend SAE 5W-30, 10W-40, and 15W-40 finished motor oils.

### Example 5 (Comparison A)

The conversion of a star polymer to a dispersant viscosity index improver was carried out in an extruder. For this particular example a Brabender melt mixer was used. The Brabender melt mixer was heated to 250°C and 60 grams of polymer was added with the mixing blades at 100 rpm. When the melt was uniformly mixed, a mixture of N,N-diethylaminopropylamine (DAP) and Penrico Oil was added over 3 minutes time (the oil serves to prevent the DAP from vapourizing out of the Brabender melt mixer before it can mix with the polymer melt). The sample was allowed to mix for 3 minutes longer and then was removed from the Brabender melt mixer.

FT-IR analysis shows conversion to the amide, the ester peak at 1726 cm⁻¹ is replaced by an amide peak at 1667 cm⁻¹. Analysis by FT-IR revealed that the conversion to amide was at least 80% based on the ratio of carbonyl absorbance to amide carbonyl absorbance. The product was then dissolved into oil to form a concentrate for use in further blending of finished motor oils.

### Example 6 (Comparison B)

The dispersant VI improver from Example 5 was blended with a motor oil to give SAE 5W-30 and 10W-40 formulations. The oils in Tables 1-4 were blended in Exxon 100N LP, the DI package was an experimental Lubrizol additive, and ACRYLOID 155 pour point depressant (ACRYLOID is a trademark) was added at 0.5 wt% of the polymer concentrate to give about 11mm²/s kinematic viscosity at 100°C. The cold cranking simulator (CCS) viscosity was measured at -25°C.

While extruding the TBMA functionalised polymer with an amine will produce a useful dispersant VI improver, it requires an extra step (going through the extruder) and exposes the polymer to excessive heat and shear stress. The extruder method is thus limited to polymers that can withstand the heat and shear, while the inventive oil concentrate method is not limited in this regard. Thus the inventive procedure may be used for low and moderate molecular weight polymers and for high molecular weight polymers whose melt viscosity is too high to allow them to be extruded without degradation.

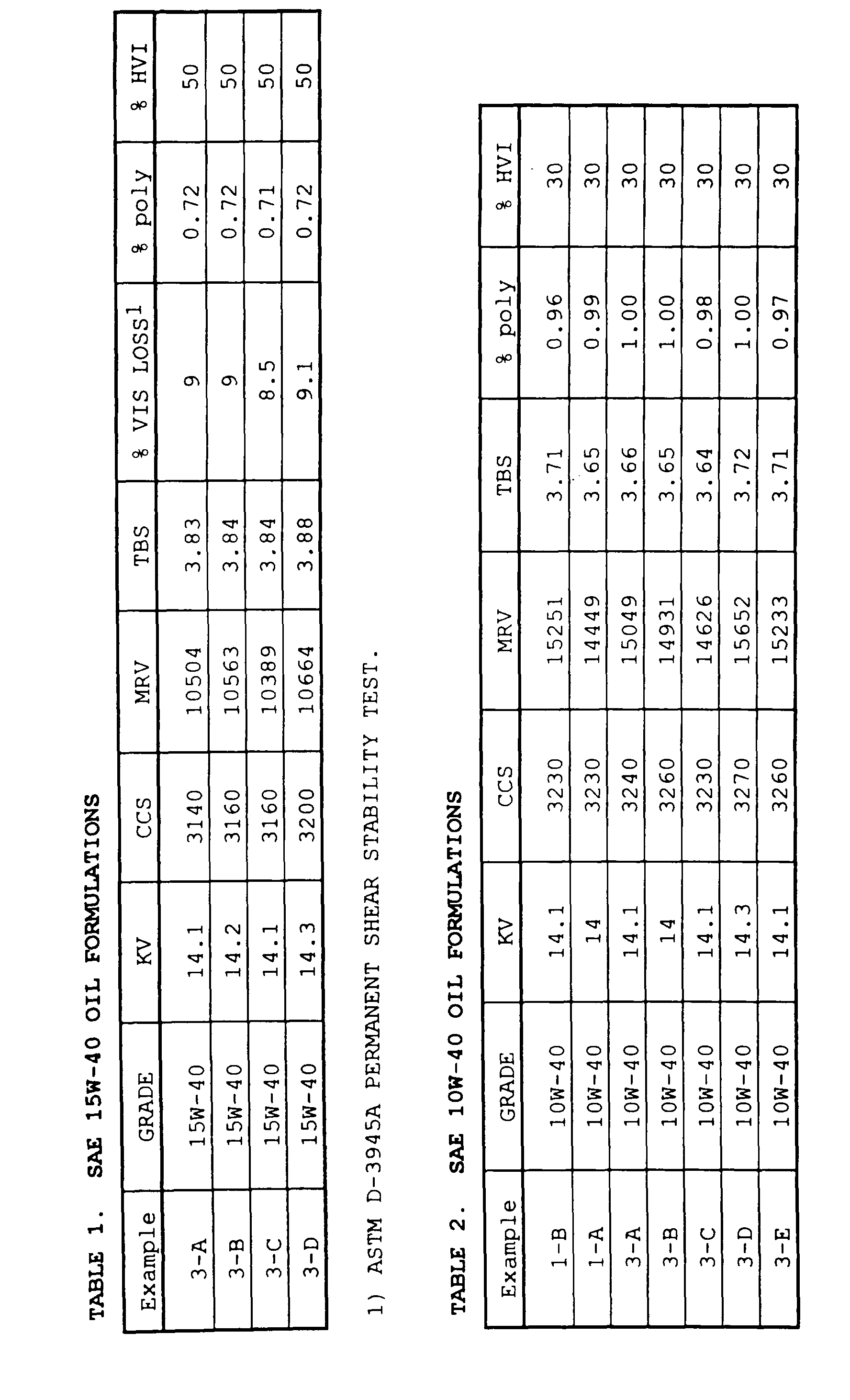

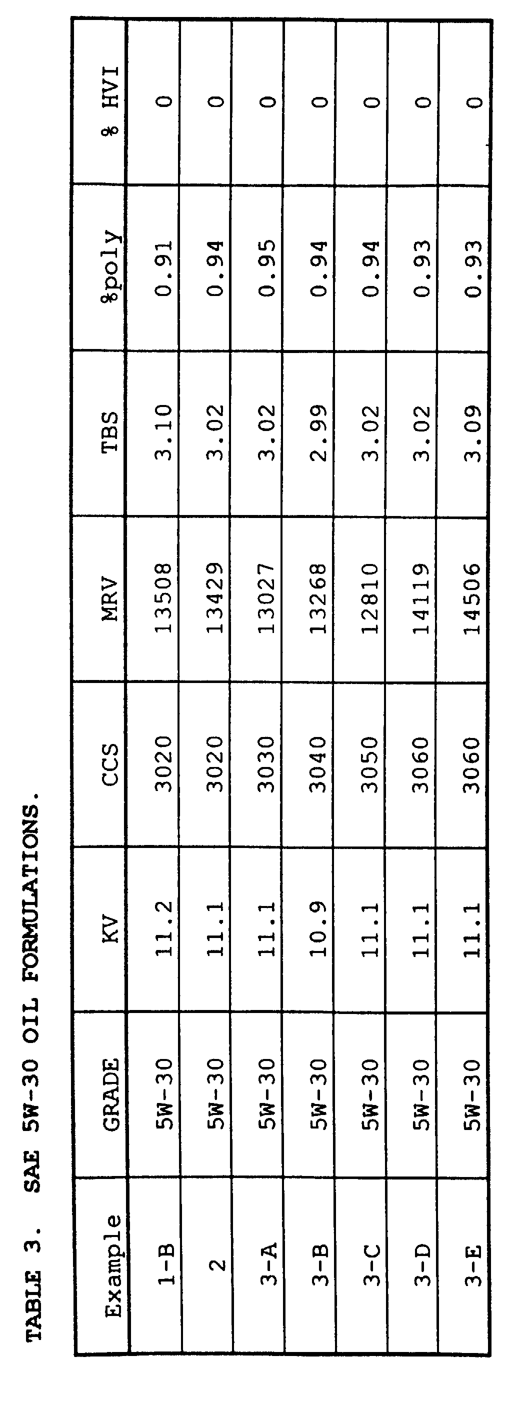

**Table 4.**

| **Rheology of SAE 5W-30 oils containing DVII polymer**. | | |
|---|---|---|
| VII | KV, mm²/3 | CCS, cP |
| PARATONE 855 | 11.0 | 4142 |
| ACRYLOID 954 | 10.8 | 3472 |
| AMOCO 6565 | 10.7 | 3527 |
| TLA 7200 | 10.8 | 3598 |
| Comparison B | 10.7 | 3245 |
| Example 1A | 10.8 | 3056 |

## Claims

1. A process for preparing a nitrogen-containing star polymer composition comprising the steps of:
a) dissolving a star polymer in a lubricating oil at a polymer concentration of less than 50% by weight, which star polymer comprises at least 3 first arms comprising hydrogenated, polymerised conjugated diene units and having a peak molecular weight from 10,000 to 200,000;
at least 3 second arms comprising polymerised methacrylate units and having a peak molecular weight from 500 to 10,000; and
a central core comprising a polymerised bisunsaturated monomer, wherein the central core connects the first and second arms in a star configuration;
b) reacting the dissolved star polymer with an acid catalyst; and
c) reacting the dissolved star polymer with an amine.

2. A process according to claim 1, wherein one or more of the first arms further comprise polymerised vinylarene.

3. A process according to claim 1 or 2 wherein the amine is reacted at a temperature of between 160 to 180°C for between 0.1 and 30 minutes.

4. A process according to any one of claims 1-3, wherein the conjugated diene is isoprene or 1,3-butadiene.

5. A process according to claim 4, wherein the methacrylate is t-butylmethacrylate, sec-butylmethacrylate, or a combination thereof.

6. A process according to any one of claims 1-5, wherein the acid catalyst is p-toluenesulphonic acid.

7. A process according to any one of claims 1-6, wherein the bisunsaturated monomer is divinylbenzene.

8. A process according to any one of claims 1-7, wherein at least 80% of the polymerised methacrylate units have been converted to amide or imide groups.

9. A process according to any one of claims 1-8, where the dissolved star polymer is reacted with the acid catalyst at a temperature between 100 to 130°C.

10. A process according to any one of claims 1-9, wherein the first arms consist of at least 90% by weight of hydrogenated isoprene.

11. A process according to any one of claims 1-10, wherein the average number of first arms per polymer molecule is from 10 to 50 and the average number of second arms per polymer molecule is from 10 to 50.

## Patentansprüche

1. Verfahren zur Herstellung einer stickstoffhaltigen Sternpolymerzusammensetzung, bei dem in Stufen
a) Sternpolymer in Schmieröl mit einer Polymerkonzentration von weniger als 50 Gew.% aufgelöst wird, wobei das Sternpolymer
mindestens 3 erste Arme, die hydrierte, polymerisierte, konjugierte Dieneinheiten umfassen und einen Spitzenwert des Molekulargewichts von 10 000 bis 200 000 aufweisen,
mindestens 3 zweite Arme, die polymerisierte Methacrylateinheiten umfassen und einen Spitzenwert des Molekulargewichts von 500 bis 10 000 haben, und
einen zentralen Kern umfaßt, der polymerisiertes, zweifach ungesättigtes Monomer umfaßt, wobei der zentrale Kern die ersten und zweiten Arme in Sternanordnung verbindet,
b) das aufgelöste Sternpolymer mit Säurekatalysator umgesetzt wird, und
c) das aufgelöste Sternpolymer mit Amin umgesetzt wird.

2. Verfahren nach Anspruch 1, bei dem ein oder mehrere der ersten Arme außerdem polymerisiertes Vinylaren umfassen.

3. Verfahren nach Anspruch 1 oder 2, bei dem das Amin bei einer Temperatur zwischen 160 und 180°C 0,1 bis 30 Minuten lang umgesetzt wird.

4. Verfahren nach einem der Ansprüche 1 bis 3, bei dem das konjugierte Dien Isopren oder 1,3-Butadien ist.

5. Verfahren nach Anspruch 4, bei dem das Methacrylat tert.-Butylmethacrylat, sek.-Butylmethacrylat oder eine Kombination derselben ist.

6. Verfahren nach einem der Ansprüche 1 bis 5, bei dem der Säurekatalysator p-Toluolsulfonsäure ist.

7. Verfahren nach einem der Ansprüche 1 bis 6, bei dem das zweifach ungesättigte Monomer Divinylbenzol ist.

8. Verfahren nach einem der Ansprüche 1 bis 7, bei dem mindestens 80 % der polymerisierten Methacrylateinheiten in Amid- oder Imidgruppen umgewandelt worden sind.

9. Verfahren nach einem der Ansprüche 1 bis 8, bei dem das aufgelöste Sternpolymer mit dem Säurekatalysator bei einer Temperatur zwischen 100°C und 130°C umgesetzt wird.

10. Verfahren nach einem der Ansprüche 1 bis 9, bei dem die ersten Arme zu mindestens 90 Gew.% aus hydriertem Isopren bestehen.

11. Verfahren nach einem der Ansprüche 1 bis 10, bei dem die durchschnittliche Anzahl der ersten Arme je Polymermolekül 10 bis 50 beträgt und die durchschnittliche Anzahl der zweiten Arme je Polymermolekül 10 bis 50 beträgt.

## Revendications

1. Procédé pour la préparation d'une composition de polymère à structure en étoile, contenant de l'azote, comprenant les étapes consistant :
a) à dissoudre un polymère à structure en étoile dans une huile lubrifiante à une concentration en polymère inférieure à 50 % en poids, polymère à structure en étoile qui comprend au moins 3 premières branches comprenant des motifs diène conjugué hydrogénés polymérisés et ayant un poids moléculaire maximal compris dans l'intervalle de 10 000 à 200 000 ;
au moins 3 secondes branches comprenant des motifs méthacrylate polymérisés et ayant un poids moléculaire maximal de 500 à 10 000 ; et
un noyau central comprenant un monomère bis-insaturé polymérisé, ledit noyau central connectant les premières et secondes branches suivant une configuration en étoile ;
b) à faire réagir le polymère à structure en étoile dissous avec un catalyseur acide ; et
c) à faire réagir le polymère à structure en étoile dissous avec une amine.

2. Procédé suivant la revendication 1, dans lequel une ou plusieurs des premières branches comprennent en outre un vinylarène polymérisé.

3. Procédé suivant la revendication 1 ou 2, dans lequel l'amine est soumise à la réaction à une température comprise dans l'intervalle de 160 à 180°C pendant un temps de 0,1 à 30 minutes.

4. Procédé suivant l'une quelconque des revendications 1 à 3, dans lequel le diène conjugué consiste en isoprène ou 1,3-butadiène.

5. Procédé suivant la revendication 4, dans lequel le méthacrylate consiste en méthacrylate de tertio-butyle, méthacrylate de sec.-butyle ou une de leurs associations.

6. Procédé suivant l'une quelconque des revendications 1 à 5, dans lequel le catalyseur acide consiste en acide p-toluènesulfonique.

7. Procédé suivant l'une quelconque des revendications 1 à 6, dans lequel le monomère bis-insaturé consiste en divinylbenzène.

8. Procédé suivant l'une quelconque des revendications 1 à 7, dans lequel au moins 80 % des motifs méthacrylate polymérisés ont été transformés en groupes amide ou imide.

9. Procédé suivant l'une quelconque des revendications 1 à 8, dans lequel le polymère à structure en étoile dissous est soumis à la réaction avec le catalyseur acide à une température comprise dans l'intervalle de 100 à 130°C.

10. Procédé suivant l'une quelconque des revendications 1 à 9, dans lequel les premières branches consistent en au moins 90 % en poids d'isoprène hydrogéné.

11. Procédé suivant l'une quelconque des revendications 1 à 10, dans lequel le nombre moyen de premières branches par molécule de polymère va de 10 à 50 et le nombre moyen de secondes branches par molécule de polymère va de 10 à 50.
